# EUROPEAN PATENT APPLICATION

(11) **EP 1 474 997 A1**
(43) Date of publication of application: **10.11.2004**
(21) Application number: 04102010.8
(22) Date of filing: 10.05.2004
(51) Int. Cl.: A23K 1/00, A23K 1/16

(54) **Method for reducing malodours of solid products containing a carboxylic acid**

(30) Priority: 09.05.2003 EP 03076410
(71) Applicant: Inve Technologies N.V., 9200 Dendermonde (BE)
(72) Inventor: Schwarzer, Koen, 9200 Dendermonde (BE); Cruz Cavero Buera, José, 22300 Barbastro (ES)
(74) Representative: Van Reet, Joseph

(57) **Abstract**

A method is claimed for reducing malodours products containing at least one C₁-C₆ mono-carboxylic acid wherein said solid product is made by drying an aqueous solution, dispersion and/or slurry which contains the said carboxylic acid and an amount of one or more proteins, including at least one water-soluble protein. The advantage of intermixing proteins with the carboxylic acid is that the malodour of this acid is reduced, even when they do not form a coating around the acid. Moreover, less material is needed when starting from a solution, dispersion and/or slurry and the drying process is less expensive and the organic acid stays more directly physiologically available when used in feed or food compared to a coated organic acid.

## Description

The present invention relates to a method for producing a solid product containing more than 20% by dry weight of at least one organic component selected from the group consisting of C₁-C₆ carboxylic acids, in particular mono-carboxylic acids, salts and C₁-C₄ esters of these carboxylic acids, and mixtures thereof.

The use of organic acids in animal feeds is known for many years (ref 1). Especially young animals can take benefit from their acidifying and bacteriostatic effects. Acids can thus help the initiation of digestion of complex dry feeds: while a reduction of the pH of fed bolus improves the endogenous enzyme activity, the acids' bacteriostatic effect reduces intestinal colonisation by pathogenic micro-organisms.

The most frequently used organic acids in feed are the carboxylic acids, the C₁-C₁₄ mono-carboxylic acids being the most important ones. The present invention is not directed to the C₇-C₁₄ carboxylic acids, nor to the higher esters of the C₁-C₆ carboxylic acids, i.e. to esters of the C₁-C₆ carboxylic acids with higher alcohols containing more than 4 carbon atoms such as triglycerides or pentyl or hexyl esters, since those organic components are substantially not volatile and therefore do not pose any odour problems. The C₁-C₆ carboxylic acids, on the contrary, are characterised in that they are more volatile acids. Evidence is provided that dietary supplemented butyric acid (C₄), besides the effects mentioned above, also beneficially acts on gut morphology in that it increases the repair of the villi on the intestinal mucosa in poultry, pigs and other animal species (ref 2, ref 3).

A drawback of the dietary supplementation of the C₁-C₆ carboxylic acids, and more in particular of butyric acid (either in its acid form or in the form of a butyrate salt) is the odour of this ingredient. Butyrate sends forth a typical, strong and unpleasant smell.

The odour of butyrate does not pose a problem for the animals consuming the feed in which butyrate is included (as no difference in feed intake pattern was observed with or without the addition of butyrate). However, for the people who work at a production unit of butyrate or at a feed plant that is processing the butyrate as a feed ingredient, the smell of the butyrate forms a major problem. The odour is not only irritating, but when butyrate comes in direct contact with the skin, the skin 'absorbs' this odour and this unpleasant smell can not be cleared away by rinsing with plenty of water or washing with soap. The odour of butyrate stays on for several days more after being in direct contact with the product.

A consequence of this odour problem is that it is very hard to find employees willing to handle butyrate on the production floor. Also some feed plants refuse to include butyrate in their feed ingredient stock simply and solely because of the odour.

In the patent literature, in particular in US-A-5 008 118 and WO 84/00668, there are already described methods for masking or reducing the odour of organic acids, like butyric acid and butyrates which are used in food or feed additives.

In the method disclosed in US-A-5 008 118 the organic acid or salt is coated, in the form of a core powder, with a lipid. Optionally, the core powder may first be pre-coated with a water-soluble component, an oily component or a high polymeric component. The water-soluble component is selected from the group consisting of sugar, proteins, inorganic salts and mixtures thereof. Pre-coating is effected either by suspending the core powder in the melted coating component or by spraying the coating component onto the core powder in the fluidised state.

When applying the method disclosed in US-A-5 008 118 for coating core powders based on C₁-C₆ carboxylic acids or carboxylates, and in particular for core powders comprising a butyrate such as sodium butyrate, a drawback of the disclosed coating method is that when the butyrate comes in direct contact with the skin, the problem of the long-lasting smell still remains. Moreover, for coating a powder, a relatively large amount of coating agent is required to reduce the bad smell and/or the bad taste. In this respect, an object of the invention disclosed in US-A-5 008 118 is to enable to coat a larger amount of coating agent compared to the prior coating methods. The coating method thus does not only increase the cost price of the product but the content of active substance in the product is moreover considerably reduced. The coated butyrate products which are presently on the market comprise for example only 30 to 40% by weight of the active organic component.

WO 84/00668 discloses a method for manufacturing solid particles comprising salts of volatile C₃-C₈ carboxylic acids, in particular acetic acid, butyric acid and valeric acid. A problem with the volatile carboxylic salts is that they are hygroscopic and absorb moisture from the environment. Due to the absorbed moisture, the salts hydrolyse and release an amount of free volatile fatty acids resulting in the characteristic unpleasant odour. In order to improve the hydrolytic stability of the carboxylic acid salts, these salts are mixed with a granular, edible material having a pH sufficiently high that the resulting pH of the mixture is greater than 7.

When the material obtained by the method disclosed in WO 84/00669 gets in contact with water vapour, a process of desorption of the volatile carboxylic acid takes place. It is known that butyric acid, and other similar volatile C₁-C₆ carboxylic acid salts, practically don't smell when they are in a water solution with a pH equal or above 7. The odour problem however appears when this solution comes in contact with the skin or when the solid product originating from the solution hydrolyses on the skin because of its humidity. WO 84/00669 does not address the problem of the long-lasting smell of butyrate or other volatile carboxylic acids after contact with the skin. An important drawback of the product manufactured by the method of WO 84/00668 is that when it reaches the skin, the resulting odour and the fixation to the skin are similar to the one of butyric acid or a butyrate salt.

An object of the present invention is therefore to provide a new method which enables to produce a solid product containing a C₁-C₆ carboxylic acid, a salt and/or a C₁-C₄ ester thereof which does not require a large amount of coating agent to reduce or to avoid the malodour of this active component and the possible long-lasting smell when the active substance comes in direct contact with the skin.

To this end, the method according to the invention is characterised in that the solid product is made by drying an aqueous solution, dispersion and/or slurry which contains said organic component and an amount of one or more proteins, including at least 3 g of at least one water-soluble protein per gram equivalent of said organic compound.

In the present specification the expression "dispersion" is used to indicate a substantially homogenous suspension of a solid material in a liquid, or also a substantially homogenous emulsion of a liquid in a liquid (to stabilise the emulsion an emulsifier may be added or the organic component itself may act as an emulsifier), whilst the expression "slurry" is used to indicate a liquid wherein a solid material is not homogeneously suspended or a liquid containing a suspended solid material which will settle if not agitated continuously. The expression "gram equivalent of the organic component" is used to indicate the "carboxylic acid gram equivalent of the organic component" and corresponds to the number of moles of the carboxylic acid and/or carboxylic acid rest groups in the organic component. In case the organic component is a carboxylic acid, or contains only one carboxylic acid rest group, the number of gram equivalents corresponds to the number of moles, also when the carboxylic acid is a dicarboxylic acid containing two -COOH groups. However, when the organic component contains two or more carboxylic acid rest groups, such as the carboxylic acid salt of a bi- or trivalent metal ion (for example Ca²⁺), one mole of the organic component corresponds to two gram equivalents thereof. In fact, when the salt hydrolyses, two (or more) carboxylic acid molecules will be formed.

According to the invention it has been found that when intermixing proteins, including at least 3 g of water-soluble proteins per gram equivalent of the active organic component, with the active organic component, the malodour of the organic component can be reduced, even when the proteins do not form a coating around the organic component. When the organic component causes a long-lasting smell of the skin when it comes into contact with the skin, it has been found that by the method according to the present invention even such a long-lasting smell can be avoided, in contrast to the method disclosed in WO 84/00668. Moreover, when starting from an aqueous solution, dispersion and/or slurry of the active organic component and the proteins so that the organic component is not coated with the proteins but intermixed therewith, less material is needed to achieve a predetermined reduction of the malodour and/or long-lasting smell, which arises when the organic component comes into contact with the skin. A further advantage is that a drying process is less expensive than a coating process and that the organic component stays more directly available (physiologically) when used in feed or food compared with a coated organic component.

In a preferred embodiment of the method according to the invention, use is made for making said aqueous solution, dispersion and/or slurry of partially hydrolysed wheat gluten, partially hydrolysed soybean protein, egg albumin, and/or lactic casein, preference being given to the use of partially hydrolysed wheat gluten and/or partially hydrolysed soybean protein.

Experiments have shown that these protein products, which all contain water-soluble proteins either naturally or after a chemical or enzymatic partial hydrolysation, are quite effective for reducing the smell of the organic component in the method according to the invention.

In a further preferred embodiment of the method according to the invention, the organic component is, in a pure form, a solid and it comprises in particular a carboxylic acid salt.

This embodiment offers two advantages. First, due to the fact that the organic component is a solid, and in particular a carboxylate, the smell thereof is already considerably reduced compared to the smell of the corresponding acid (unless it is hydrolysed in an acidic medium or comes into contact with the skin). Further, a smaller amount of further solid materials is needed to enable to achieve a solid product after the drying step. In other words, the solid product may contain a larger amount of the active organic component.

Other particularities and advantages of the invention will become apparent from the following more detailed description of some particular embodiments of the method and the solid product according to the present invention.

In the method according to the invention a solid product is made containing as active organic component a C₁-C₆ carboxylic acid, a salt of a C₁-C₆ carboxylic acid, a C₁-C₄ ester of a C₁-C₆ carboxylic acid, and/or a mixture of these substances. The carboxylic acid is more particularly a mono-carboxylic acid. Possible carboxylic acids are formic acid, acetic acid, propionic acid, lactic acid, butyric acid (n-butyric acid or iso-butyric acid), 2-methylbutyric acid, n-valeric acid, iso-valeric acid, tert. valeric acid and caproic acid. From these acids the C₃-C₅ acids, in particular the C₄-C₅ acids, and more particularly butyric acid, are the most important but has also the most bad smells. The salts of the carboxylic acids include for example sodium, potassium, calcium, magnesium, iron, copper, or zinc salts. The esters of the carboxylic acids are for example methyl, ethyl or propyl esters.

In order to reduce the smell of these active organic components, use is made in the method according to the invention of one or more proteins including at least one water-soluble protein. Per gram equivalent of the organic component, use is more particularly made of at least 3 g, preferably of at least 6 g, of at least one water-soluble protein. As protein or proteins use can be made of different kinds of natural proteins including cereal proteins (from barley, wheat, corn, rice, ...), leguminous proteins (from bean, pea, lupine, ...), proteins from tuberous plants and roots (from potato, ...), proteins from oil seeds (from soybean, ...), fish proteins, milk proteins, egg proteins, blood proteins, meat and bone proteins, hoof and horn proteins and feather proteins, and further of partial hydrolysates of these proteins. When these proteins are not water-soluble, they can be hydrolysed partially, more particularly to such an extend that they become at least partially water-soluble. For reducing the smell of the active organic components, including the smell which remains after contact with the skin, egg albumin and lactic casein appeared to be quite effective whilst partially hydrolysed wheat gluten and partially hydrolysed (enzyme modified) soybean protein appeared to be even more effective.

In the method according to the invention the solid product containing the above described active organic component is made by drying an aqueous solution, dispersion and/or slurry containing at least the organic component and an amount of the above described protein or proteins including, per gram equivalent of the organic component, at least 3 g, preferably at least 6 g, of at least one water-soluble protein, until a solid product is obtained. In this solid product, the active organic component is therefore not coated with these proteins but it is intermixed therewith and this preferably in a substantially homogenous way. For drying the aqueous solution, dispersion and/or slurry, different techniques can be used including spray-drying, vacuum drying, freeze-drying (lyophilisation), oven drying, air drying, etc. The aqueous solution, dispersion and/or slurry is preferably dried to a water content of at the most 15% by weight, more preferably to a water content of at the most 12% by weight and most preferably to a water content of at the most 8% by weight.

For preparing the aqueous solution, dispersion and/or slurry containing the active organic component, this organic component can be either added as such or reagents can be added which react in the aqueous solution, dispersion and/or slurry to produce the active organic component. As an example, in order to achieve sodium butyrate as active organic component in the aqueous solution, dispersion and/or slurry it is first of all possible to dissolve this sodium butyrate in the aqueous solution, dispersion and/or slurry. On the other hand, it is also possible to mix liquid butyric acid and sodium hydroxide in the aqueous solution, dispersion and/or slurry before drying it so that they can react to produce sodium butyrate. It is even possible to form the aqueous solution, dispersion and/or slurry during or just before the drying process itself, in particular during or just before the spray-drying process. A first stream containing the butyric acid and the proteins and a second stream containing a sodium hydroxide solution can for example be brought together just before being let to the spray nozzles or both streams can possibly even be sprayed through separate nozzles in to the drying column or tower so that the required reactions to produce sodium butyrate occur during the actual drying step itself. An advantage of this latter embodiment is that, when the active organic component is not or only slightly water-soluble, water-soluble or miscible reagents can be used (for example calcium hydroxide) to prepare both aqueous streams, the active organic component being only produced during or just before the drying process so that it does not have to be kept in suspension.

In a further alternative embodiment, when a solid reagent is used, this solid reagent can be spread onto a support, in particular onto a conveyor belt, and the other liquid reagent stream or streams can be sprayed onto the solid reagent. The liquid reagent stream or streams contain such an amount of water that, together with any water produced during the reaction, a solution, suspension or slurry is formed. This solution, suspension or slurry can be dried by the heat produced during the exothermic reaction and/or by external heat. The solid reagent spread on the support may for example be calcium hydroxide powder onto which butyric acid and a protein solution or dispersion is sprayed.

The aqueous solution, dispersion and/or slurry is preferably composed to contain, per mole of the active organic component, at least 1 g, preferably at least 5 g and more preferably at least 10 g of the protein or proteins. A higher amount of proteins enables to achieve a better reduction of the malodour or taste of the active ingredient. However, in view of avoiding too much ballast material in the solid product, use is preferably made of at the most 50 g, more preferably of at the most 35 g and most preferably of at the most 25 g of the protein or proteins, per mole of the active organic component.

When subjecting the aqueous solution, dispersion and/or slurry to the drying step, it is preferably kept in a homogeneous state, i.e. any settling of solids or separation of different phases is preferably prevented so that the proteins are homogeneously mixed with the active organic component when starting the drying process. To achieve this, the aqueous solution, dispersion and/or slurry is preferably a solution which is substantially free of suspended solids or a dispersion which contains only a small amount of suspended solids and which does not need continuous agitation to keep the solids in suspension. A further advantage of dissolved substances is that the proteins and the active organic component can also interact better with one another to form the physical and/or chemical bonds which are required to reduce the malodour of the organic component. To avoid or reduce the amount of suspended solids, and to enable a better interaction with the active organic component to form the physical and/or chemical bonds which are required to reduce the malodour of the organic component, at least a portion of the water-soluble protein or proteins are dissolved in the aqueous solution, dispersion and/or slurry. Preferably, the aqueous solution, dispersion and/or slurry is composed to contain, per mole of the organic component, at least 0.5 g, preferably at least 3 g and more preferably at least 6 g of the water-soluble proteins in a dissolved state.

To achieve a good interaction between the proteins and the organic component, the aqueous solution, dispersion and/or slurry preferably contains at least 30% by weight, preferably at least 45% by weight and more preferably at least 55% by weight of water. The aqueous solution, dispersion and/or slurry preferably contains such an amount of water that substantially all of the organic component, when water-soluble, is dissolved therein. The minimum water content depends basically on both the characteristics of the particular salt and of the particular process, with the predominantly limiting factor being the salt. Important characteristics of the salt are the solubility in water, the amorphous or crystalline shape and the particle size. For example a solution of sodium butyrate in less than 45% of water presents a real risk of precipitation of the salt as the agitation of saturated or over-saturated solutions speeds the crystallisation. However, for other salts of short-chain monocarboxylic acids, the minimum content of water can be reduced to 30%. Further on, the incorporation of the water-soluble protein and the process of drying also determine the preferred minimum content of water. For the process the conditions of agitation and pumping of the product are determining: a spray-drying process requires that the slurry/dispersion/solution can be pumped into the equipment, while a drying process in the oven allows to put a paste in trays in the oven. Usually, the aqueous solution, dispersion or slurry advantageously contains at least 30% by weight of water.

In its pure form, the active organic component is preferably a solid, for example a carboxylate such as a butyrate. An advantage of a solid organic component is that no additives are required to enable to produce the final solid product so that this product may show a larger content of the active organic component. In this respect, the aqueous solution, dispersion and/or slurry is preferably composed so that at least 25% by weight, preferably at least 50% by weight, more preferably at least 65% and most preferably at least 75% of its dry matter content is formed by said organic component. In this way, when no further additives or coatings are applied to the dried solid product, this product has a larger content of the active organic component than the solid products which are presently on the market. The method according to the present invention however does not exclude any further processing of the obtained powdery solid product. The powdery product can for example be processed into tablets or granules (with or without the addition of other products). Optionally, the product can further be coated.

In order to provide the proteins in the aqueous solution, dispersion and/or slurry, use can be made of a protein product or a mixture of protein products which contain, in addition to proteins, further substances. This protein product or mixture of protein products contain preferably at least 30% by weight, more preferably at least 50% by weight and more preferably at least 65% by weight of said protein or proteins. By using a protein product or protein source which has a higher protein content, it is possible to achieve a final solid product having a higher content of the active organic component. Since in particular the water-soluble proteins appeared to be very effective in reducing the malodour, and especially the long-lasting smell, of the carboxylic acids, the proteins in the protein product consist preferably of at least 30% by weight, and more preferably of at least 50% by weight, of water-soluble proteins.

Instead of using an active organic component which is solid in its pure form, it is also possible to use an active organic component which is liquid in its pure state, for example butyric acid or lower alkyl esters (C₁-C₄) thereof. In order to enable to achieve a solid product after drying, enough other solids should be included in the aqueous solution, dispersion and/or slurry. These solids include first of all the proteins, including the water-soluble proteins. Moreover, in addition to the proteins one or more carriers, i.e. fillers, can be added to the aqueous solution, dispersion and/or slurry.

When use is made of a protein product or protein source containing, in addition to the protein or proteins, further solid substances, these further solid substances form a carrier material which also contributes in achieving a solid product. In this respect, protein sources having a lower protein content may be very suitable for use in combination with a liquid active organic component. Instead of lactic casein, it may for example be preferred to use whey containing, in addition to the water-soluble milk proteins, a considerable amount of lactose and further a smaller amount of minerals. On the other hand separate carrier materials can be added, for example maltodextrines, dextrose, gums, salts....

### Examples

In the following examples the odour reduction was evaluated as follows:
- by the smell of the product as such
- by the smell of the product after applying a small amount of the product on the skin, wetting it, rubbing it during 30 seconds and then cleaning the skin with water.
Large odour reduction is corresponding with +++
Medium odour reduction is corresponding with ++
Small odour reduction is corresponding with +
No odour reduction is corresponding with -

**Table1:**

| overview of the effect of some protein sources on the odour reduction as determined in Examples 1-4 and comparative Examples 1 and 2. | | | |
|---|---|---|---|
| Protein source | Dosage applied (% of end-product on dry matter) | Odour reduction | Odour reduction after contact with skin |
| Ex. 1: Hydrolysed wheat gluten | 15 | +++ | + |
| Ex. 2: Enzyme modified soybean protein | 15 | ++ | + |
| Ex. 3: Egg albumin | 15 | + | + |
| Ex. 4: Lactic casein | 15 | + | + |
| Comp. Ex. 1: Ground alfalfa | | | |
| - at 60°C | 50 | + | - |
| - at 22°C | 50 | + | - |
| - at 22°C and dried at 105 °C | 50 | - | - |
| Comp. Ex. 2: Ground alfalfa at 60 °C | 15 | - | - |

### Example 1

Hydrolysed wheat gluten:
characterised by:
· Protein content on dry matter: minimum 76%
· Soluble protein content on total protein content: approximatively 70%
   Process: natural protein derived from wheat obtained by wet milling and hydrolysed enzymatically.

13.5 g of hydrolysed wheat gluten were placed in a 400 ml beaker and 133.5 g of demineralized water and 153 g of a 50 % w/w sodium butyrate aqueous solution were added. During 10 minutes, the solution was mechanically stirred to approximately 300 rpm (using a HEIDOLPH RZR-1 stirrer and a helical stir bar). Afterwards and due to the rest of agglomerates that dissolved slower, the dispersion was stirred during approximately 5 minutes to 8000 rpm (with a dispersor IKA ULTRA-TURRAX T25 basic with dispersing tool S25NK19G). A cream coloured solution was obtained with some matter in suspension but homogenous.

Next, drying this suspension (keeping it with constant agitation) occurred by pumping it with a built-in peristaltic pump (20 % of the capacity of the pump) to a Mini Spray Dryer BÜCHI B-191, previously switched on with the processing patterns. The air inlet temperature was 170 ºC, the aspiration power was 80 % and the air flow for the nozzle was 600 litres/hour at 6 bar pressure (with an interval of 4 for the pulverisation nozzle cleaner). The outlet air temperature was kept during all the process at approximately 95 ºC.

A fine white-cream coloured product (with 2.16% of water) of non-disagreeable smell and acid-milky aroma with a touch of cereal aroma was obtained. The smell of butyrate was largely reduced There was no or very little butyric odour noticed on the final product. In contact with the skin the odour of butyric acid disappeared after rinsing with water or washing with soap.

### Example 2

Enzyme modified soybean protein:
characterised by:
· Protein content on dry matter: minimum 75%
· Soluble protein content on total protein content: At least 50%
   Process: natural protein derived from soy protein by carefully controlled enzymatic hydrolysis.

13.5 g of enzyme modified soy protein were placed in a 400 ml beaker and 133.5 g of demineralised water and 153 g of a 50% w/w sodium butyrate aqueous solution were added. During 10 minutes, the suspension was agitated mechanically and an ultrasonic bath was used for approximately 5 minutes so that a cream-coloured suspension was obtained.

Next, drying this suspension (keeping it with constant agitation) occurred by pumping it with a built-in peristaltic pump (20 % of the capacity of the pump) to a Mini Spray Dryer BÜCHI B-191, previously switched on with the processing patterns. The same operation conditions were used as described in Example 1. A fine white lightly cream-coloured product (with 2.22% of water) was obtained and its smell of butyrate was mainly reduced. There was very little of a butyric odour on the final product. In contact with the skin the odour of butyric acid disappeared after rinsing with water or washing with soap.

### Example 3

Egg albumin:
characterised by:
·· Protein content on dry matter: minimum 80%
· Soluble protein content on total protein content: at least 90%
   Process:

13.5 g of egg albumin were placed in a 400 ml beaker and 133.5 g of demineralised water and 153 g of a 50% w/w Sodium Butyrate aqueous solution were added. During 15 minutes, the suspension was agitated mechanically at 35-40°C in order to obtain faster a suspension. A yellow-coloured suspension was obtained.

Next, drying this suspension (keeping it with constant agitation) occurred by pumping it with a built-in peristaltic pump (20 % of the capacity of the pump) to a Mini Spray Dryer BÜCHI B-191, previously switched on with the processing patterns. The same operation conditions were used as described in Example 1. A fine white powder (with 2.23% of water) was obtained. The smell of butyric was moderately reduced. There was some butyric odour on the final product. In contact with the skin the odour of butyric acid disappeared after rinsing with water and washing with soap.

### Example 4:

Lactic casein:
characterised by:
· Protein content on dry matter: 86%
· Soluble protein content on total protein content: at least 60%
   Process: it is made by adding microbial cultures to milk to convert lactose to lactic acid, lowering the pH and precipitating the casein by heating.

13.5 g of lactic casein were placed in a 400 ml beaker and 133.5 g of demineralised water and 153 g of a 50% w/w Sodium Butyrate aqueous solution were added. While stirring, the solution was stabilized by adding NaOH 1 N to get a pH of 13.0. A slightly white-opalescent suspension was obtained.

Next, drying this suspension (keeping it with constant agitation) occurred by pumping it with a built-in peristaltic pump (20 % of the capacity of the pump) to a Mini Spray Dryer BÜCHI B-191, previously switched on with the processing patterns. The same operation conditions were used as described in Example 1. A fine white powder (with 2.79% of water) was obtained. The smell of butyric was moderately reduced. There was some butyric odour on the final product. In contact with the skin the odour of butyric acid disappeared after rinsing with water and washing with soap.

### Comparative Example 1:

The procedure followed in this example corresponded substantially to Example 4 of WO 84/00668.
Ground alfalfa 1:
characterised by:
· Protein content on dry matter: 20%
· Soluble protein content on total protein content: 5%
   Process: alfalfa pellets are made by granulation of dried alfalfa. For this experiment the pellets were ground to alfalfa meal.

A stock solution of sodium butyrate containing 67,4% sodium butyrate and 32,6% water was prepared. Because of the low solubility of sodium butyrate in this low quantity of water, a white lumpy paste was obtained. 30 grams of ground alfalfa were added to 30 grams of the above-mentioned paste at 60°C. Mixing occurred with some difficulty. A powder was obtained that flew quite well, although it gave a sensation of humid powder. In the product the particles of alfalfa could be distinguished from the white particles corresponding to butyrate. The perception of the smell corresponded to the smell of alfalfa. In contact with the skin the unpleasant odour was released and a fixation to the skin similar as in the case of with pure butyrate was present.

Example 5 was also carried out at 22°C instead of 60°C. Mixing was easier and a similar powder was obtained which was more homogeneous than the powder obtained at 60°C. The perception of the smell of the product corresponded to the smell of alfalfa. However, the unpleasant odour was still significantly released when the product was brought in contact with the skin.
Subsequently the product obtained here was dried at 105°C. A dry powdered product was obtained. The perception of the smell of the product corresponded to a mixture of the smell of alfalfa and of butyrate. When rubbing the product over the skin, the malodour of butyrate was clearly released and fixation on the skin remained. An important difference with the method according to the invention is that in this example a much smaller amount of water-soluble proteins were used, namely only about 1.6 g of water-soluble proteins per gram equivalent of sodium butyrate.

### Comparative Example 2:

Ground alfalfa 2:
characterised by:
· Protein content on dry matter: 20%
· Soluble protein content on total protein content: 5%
   Process: alfalfa pellets are made by granulation of dried alfalfa. For this experiment the pellets were ground to alfalfa meal.

13.5 g of ground alfalfa were placed in a 400 ml beaker and 133.5 g of demineralized water and 153 g of a 50 % w/w sodium butyrate aqueous solution were added. During 10 minutes, the solution was mechanically stirred to approximately 300 rpm (using a HEIDOLPH RZR-1 stirrer and a helical stir bar). A very liquid dispersion was obtained. Next, drying this dispersion (keeping it with constant agitation) occurred by pumping it with a built-in peristaltic pump (20 % of the capacity of the pump) to a Mini Spray Dryer BÜCHI B-191, previously switched on with the processing patterns. The air inlet temperature was 170 ºC, the aspiration power was 80 % and the air flow for the nozzle was 600 litres/hour at 6 bar pressure (with an interval of 4 for the pulverisation nozzle cleaner). The outlet air temperature was kept during all the process at approximately 95 ºC. During the drying process, the unpleasant butyrate odour was released. At the end of drying process a powder was obtained containing a mixture of alfalfa particles and butyrate. The perception of the smell of the product corresponded to a mixture of the smell of alfalfa and butyrate. However the release of the smell during the production process was a significant drawback. Moreover, also the malodour of butyric acid appeared when the product came in contact with the skin. An important difference with the method according to the invention is that in this example a much smaller amount of water-soluble proteins were used, namely only about 0.2 g of water-soluble proteins per gram equivalent of sodium butyrate.

### References

Ref. 1: Galfi, P., Neoprady, S. (1995). Acides organiques monocarboxyliques (2-6 carbones) dans la nutrition des pores et autres especes. Symposium International: Alimentation Animale et Santé Publique, Additifs sans Résidu. « Probiotiques - Prébiotiques - Parabiotiques » - 17-18 mai 1995, 16 pp.
Ref. 2: Pluske et al. (2001). Morphological and functional changes in the small intestine of the newly-weaned pig. In : Gut Environment of Pigs, Nottingham University Press, UK, 1 -27.
Ref. 3: Andoh, A., Bamba, T., Sasaki, M. (1999). Physiological and antiinflammatory roles of dietary fiber and butyrate in intestinal functions. Journal of Parenteral and enteral nutrition 23: S70-S73.

## Claims

1. A method for producing a solid product containing more than 20% by dry weight of at least one organic component selected from the group consisting of C₁-C₆ carboxylic acids, in particular mono-carboxylic acids, salts and C₁-C₄ esters of these carboxylic acids, and mixtures thereof, **characterised in that** said solid product is made by drying an aqueous solution, dispersion and/or slurry which contains said organic component and an amount of one or more proteins, including at least 3 g of at least one water-soluble protein per gram equivalent of said organic compound.

2. A method according to claim 1, **characterised in that** said aqueous solution, dispersion and/or slurry is composed to contain, per gram equivalent of said organic component, at least 6 g of said water-soluble protein.

3. A method according to claim 1 or 2, **characterised in that** said aqueous solution, dispersion and/or slurry is composed to contain, per gram equivalent of said organic component, at least 0.5 g, preferably at least 3 g, preferably at least 6 g, of said water-soluble protein in a dissolved state.

4. A method according to any one of the claims 1 to 3, **characterised in that** said aqueous solution, dispersion and/or slurry is composed to contain, per gram equivalent of said organic component, at least 1 g, preferably at least 5 g and more preferably at least 10 g of said one or more proteins.

5. A method according to any one of the claims 1 to 4, **characterised in that** said aqueous solution, dispersion and/or slurry is composed to contain, per gram equivalent of said organic component, at the most 50 g, preferably at the most 35 g and more preferably at the most 25 g of said one or more proteins.

6. A method according to any one of the claims 1 to 5, **characterised in that** said aqueous solution, dispersion and/or slurry is composed to contain at least 30% by weight, preferably at least 45% by weight of water, and more preferably at least 55% by weight of water.

7. A method according to any one of the claims 1 to 6, **characterised in that** said proteins comprise at least one protein selected from the group consisting of cereal proteins, leguminous proteins, proteins from tuberous plants and roots, proteins from oil seeds, fish proteins, milk proteins, egg proteins, blood proteins, meat and bone proteins, hoof and horn proteins and feather proteins, and further of partial hydrolysates of these proteins.

8. A method according to any one of the claims 1 to 7, **characterised in that** for making said aqueous solution, dispersion and/or slurry, use is made of partially hydrolysed wheat gluten, partially hydrolysed soybean protein, egg albumin, and/or lactic casein, preference being given to the use of partially hydrolysed wheat gluten and/or partially hydrolysed soybean protein.

9. A method according to any one of the claims 1 to 6, **characterised in that**, in pure form, said organic component is a liquid, said organic component comprising in particular a carboxylic acid and/or a C₁ to C₄ ester thereof, the organic component comprising preferably a carboxylic acid.

10. A method according to claim 9, **characterised in that** said aqueous solution, dispersion and/or slurry is composed to contain, in addition to said organic component and said one or more proteins, at least one carrier for the liquid organic component.

11. A method according to any one of the claims 1 to 8, **characterised in that**, in a pure form, said organic component is a solid, said organic component comprising in particular a carboxylic acid salt.

12. A method according to any one of the claims 1 to 11, **characterised in that** said aqueous solution, dispersion and/or slurry is composed to have a predetermined dry matter content, at least 25% by weight, preferably at least 50% by weight, more preferably at least 65% by weight and most preferably at least 75% by weight of which is formed by said organic component.

13. A method according to any one of the claims 1 to 12, **characterised in that** for providing said one or more proteins in said aqueous solution, dispersion and/or slurry, use is made of a protein product, or a mixture of protein products, which contains at least 30% by weight, preferably at least 50% by weight and more preferably at least 65% by weight of said one or more proteins.

14. A method according to claim 13, **characterised in that** said one or more proteins, contained in said protein product or in said mixture of protein products, contain at least 30% by weight, and preferably at least 50% by weight, of said at least one water-soluble protein.

15. A method according to any one of the claims 1 to 14, **characterised in that** said aqueous solution, dispersion and/or slurry is dried to a water content of at the most 15%, preferably to a water content of at the most 12% and more preferably to a water content of at the most 8% by weight.

16. A method according to any one of the claims 1 to 15, **characterised in that** said organic component comprises butyric acid or a salt or a C₁-C₄ ester thereof, the organic component preferably comprises a salt of butyric acid, in particular a sodium, potassium, calcium, magnesium, iron, copper, or zinc salt.

17. A method according to any one of the claims 1 to 12, **characterised in that** said organic component is selected from the group consisting of C₁-C₅ carboxylic acids, salts and C₁-C₄ esters of these carboxylic acids and mixtures thereof, preferably of C₃-C₅ carboxylic acids, salts and C₁-C₄ esters of these carboxylic acids and mixtures thereof, and more preferably of C₄-C₅ carboxylic acids, salts and C₁-C₄ esters of these carboxylic acids and mixtures thereof.

18. A solid product containing at least one organic component selected from the group consisting of C₁ - C₆ carboxylic acids, in particular mono-carboxylic acids, salts and C₁-C₄ esters of these carboxylic acids, and mixtures thereof, **characterised in that** it is obtainable by a method according to any one of the claims 1 to 17 and contains said organic component intermixed with an amount of one or more proteins, including at least 3 g of at least one water-soluble protein per gram equivalent of said organic compound, the organic component being preferably intermixed substantially homogeneously with said proteins.
